# EUROPEAN PATENT SPECIFICATION

(11) **EP 2 088 982 B1**
(45) Date of publication and mention of the grant of the patent: **18.01.2017**
(21) Application number: 07848164.5
(22) Date of filing: 22.11.2007
(51) Int. Cl.: A61G 15/16, A61C 19/00

(54) **CONNECTOR ARRANGEMENT FOR DENTAL CARE UNIT**
VERBINDUNGSANORDNUNG FÜR EIN ZAHNPFLEGEGERÄT
ENSEMBLE RACCORD POUR APPAREIL DE SOINS DENTAIRES

(30) Priority: 22.11.2006 FI 20061030; 19.03.2007 FI 20070220
(43) Date of publication of application: 19.08.2009
(73) Proprietor: PLANMECA OY, 00880 Helsinki (FI)
(72) Inventor: DE GODZINSKY, Christian, 01260 Vantaa (FI); SAVOLAINEN, Heikki, 00250 Helsinki (FI)
(86) International application number: PCT/FI2007/050631
(87) International publication number: WO 2008/062102

(56) References cited:
- EP-A2- 0 820 733
- WO-A1-97/44553
- WO-A1-99/27865
- DE-C1- 19 630 349
- DE-U1-202004 012 376
- JP-A- 09 173 394
- JP-A- 11 305 680
- US-A- 4 041 608
- US-A- 5 529 533

## Description

### FIELD OF THE INVENTION

The invention concerns an accessory arm according to patent claim 1 and a dental care apparatus according to patent claim 3.

### BACKGROUND OF THE INVENTION

A dental care unit is an important tool for a dentist and it is used for several hours a day. A good ergonomics of the tool is important in longterm working.

A dental care unit is a complicated and expensive device. In modern dental care units, modern technique is used effectively and new applications are continuously developed. A lifetime of a dental care unit is long, which means that during the life cycle of the unit there is plenty of time for the technology to develop. To enable effective work also with the older dental care units and to get treatment to correspond to the latest common requirements of the field, the older dental care units have to be updated according to the altered requirements.

One way to update a dental care unit is to connect a new accessory to it. It is quite usual that when such a connection typically requires both a mechanical connection point and a coupling for media transmission, new modules must be connected to the dental care unit in a location where the connection is possible to begin with. Such a connection site does not necessarily enable ergonomic use of the accessory or taking into consideration the individual working habits and preferences of dentists, or taking into consideration e.g. the differences between left- and righthand working.

Regarding accessories to be fixedly integrated with a dental care apparatus, the mechanical and electric connection of them to the dental care unit must typically be realized in separate stages and by various components - e.g. by attaching modules with screws to the body of the dental care unit. The operation requires time and tools and detaching of the module whose connection is realized like this is not possible "on the fly". Since the connection is awkward to take down to say the least, the threshold to place e.g. a new, different module to the connection location in question is high - or in practice technically impossible to realize without special tools and/or assistance of a skilled maintenance person.

An example of a prior dental care unit comprising arms to support implements to be used in connection with dental care work is presented in a publication DE 20 2004 012 376 U1.

### BRIEF DESCRIPTION OF THE INVENTION

The object of the invention is to improve versatility of a dental care apparatus and flexibility of use of the apparatus to take into consideration various individual needs of users of dental care units. The aim is to enable fixing with ease, preferably even in connection with dental treatment, e.g. user interfaces or other modules, especially modules arranged to be fixed via arms, to the dental care unit and/or to move them from one location to another. The aim is to enable taking into consideration the ergonomic differences between users of a dental care unit by providing the user with new kinds of possibilities to place modules important in view of operating the dental care unit at ergonomically preferable places, such as to enable that both the left- and the right-handed dentists can change places of at least some modules from one side of the dental care unit to another.

A further object of the invention is a quick-connector type construction, which for its steadiness at least essentially corresponds to a fixed connection, and is able to support accessories to be connected to the dental care unit in such a way that the outcome is a substantially clearance-free connection, as e.g. any possible interruptions in transmission of media caused by clearance in the coupling may be critical for the operation of the whole apparatus.

The essential features of the invention are presented in the attached patent claims. The invention thus provides a connector with the help of which new modules may be integrated with the dental care unit steadily but still in such a way that the modules may be disengaged and connected to the unit without tools. Thanks to the invention, both mechanical and electric connection to the dental care unit is achieved for an accessory device and the electric bus used in the solution widely supports various accessory devices.

One preferable embodiment of the invention offers a connection site for quick attachment, whereto e.g. the user interface module engages both electrically and mechanically. By placing such connection sites for modules on different sides of a dental care unit, several different user interfaces or other accessories may be connected to the dental care unit. The accessory connector according to the invention makes the structure of the dental care unit flexible and enables the user to connect by him/herself those modules to the dental care unit needed for the operation ahead at a time and to positions according to one's own preferences.

Besides updating the dental care unit, the connector as a versatile interface offers the dental care staff a possibility to improve usability of the dental care unit: The layout of the dental care apparatus may be more easily adapted in accordance with various working preferences by connecting device-modules to different sites on the dental care unit. The special modules to be attached to these accessory module couplings of an individual unit may be collectively used as common modules in separate dental care units of the whole clinic, which will make purchasing of special modules justifiable as they can be used effectively.

The quick-connector structure the invention provides enables a steady connection of an accessory to a dental care unit in such a way that the accessory may be replaced quickly when needed. The other half of the quick-connector offered by the invention, in a preferable embodiment the female connector, is fixedly arranged on the body of a dental care unit to offer at least a mechanical but if needed also an electric connection interface.

### BRIEF DESCRIPTION OF THE FIGURES

In the following, the invention and some of its preferable embodiments are described more closely and by also referring to the enclosed figures, of which figures
Fig. 1 presents a dental care apparatus in which the connector arrangement according to the invention is preferably applied,
Fig. 2 presents a connector construction according to one preferable embodiment of the invention and
Fig. 3 presents an arm according to one preferable embodiment of the invention for attaching a module to a dental care unit.

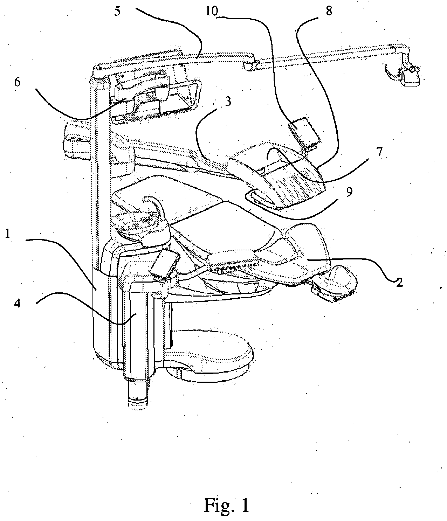

Fig. 1 presents a dental care apparatus, which contains a dental care unit (1) and a patient chair (2). Typically the dental care apparatus additionally includes a group of various arms, such as an arm assembly for the dentist (3), an arm assembly for the assistant (4), an arm assembly for an operation light (5) and e.g. an arm assembly for a display (6).

An arm (6) arranged for the dentist's instruments contains an instrument table (7) and an arm assembly (3), by which the instrument table is attached to the dental care unit (1). In Fig. 1, quick-connector connection sites (8, 9) according to the invention are arranged to this instrument table (7), symmetrically on both sides of the instrument table (7). In Fig. 1, a user interface module (10) is connected to another of these connection sites (8, 9), which user interface module (10) is thus easily within reach of the dentist during treatment.

According to the invention, connection sites for accessories are thus arranged on the dental care apparatus preferably in locations where the module to be connected to the apparatus is well at hand for the dentist and/or for the assistant. In the dental care apparatus, instrument tables for the dentist and for the assistant lying at the ends of arms, amongst others, constitute such places. Location of the connection sites is preferably on lower surfaces to lessen the possibility that liquids possibly trickling on the surfaces of the dental care apparatus would find their way to the connector construction.

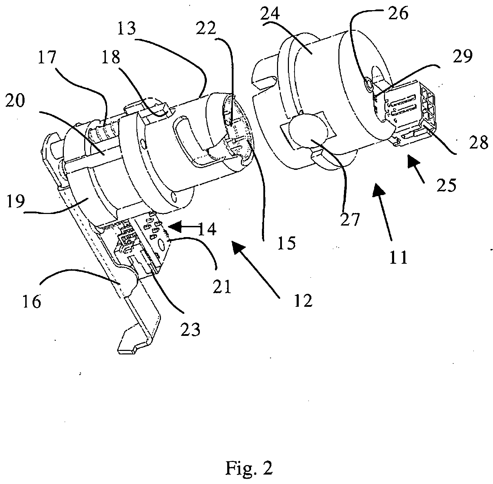

Fig. 2 presents one preferable embodiment of the invention for a connector arrangement of a dental care apparatus to electrically and mechanically connect the modules to a dental care unit. The connector construction preferably contains two different halves, a female (11) and a male connector half (12). The male connector half contains a mechanical body (13), a card assembly (14) making an electric connection, a pin support (15), a release switch (16), a spring (17), a safety wedge (18), a counterpart (19) and screws (20) for fixing the connector. The circuit board assembly (14) forming the electric connection of the male connector half (12) includes a card (21) serving as a body, spring-like contact pins (22) forming the electric connection to the other connector half, and a standard connector (23) which is to be fixedly coupled. The number and quality of pins making the electric connection reserved for media transmission has been chosen on the basis of the power transmission and the number of channels required.

In the embodiment according to Fig. 2, the counterpart for the male connector, the female connector (11), comprises a mechanical body (24), a circuit board assembly (25) forming the electric connection of the coupling for the media transmission connector, a fastening pin (26) for the card and a stud (27) for preventing axial movement. The circuit board assembly (25) of the female connector (11) includes a standard connector (28) and a circuit board (29), in which there are contact surfaces for the spring-like contact pins (22) of the male connector (12).

An axial slot for the safety wedge (18) is arranged on the body (13) of the cylindrical male connector. The wedge (18) stays in the slot thanks to the hole on the counterpart, and a coil spring (17) is placed around the wedge (18), which coil spring tends to push the wedge (18) towards the tip of the male connector (12). The purpose for another slot on the male connector body (13), which slot in a preferable embodiment is descending, is to prevent axial movement of the male connector towards the body of the female connector (24). When connecting the connector, the stud (27) of the female connector moves in the descending slot and forces the connector bodies (13, 24) to turn with respect to each other. When turning, the safety wedge (18) on the male connector half (13) closes into the wedge-shaped slot in the female connector body and stops turning of the connector bodies with respect to each other. Thanks to the spring power, the safety wedge (18) preventing the turning is pressed tightly against the body of the female connector (24) and thus removes clearance between the connector halves (11, 12). Thus, the construction of the quick-connector is realized in such a way that it tends to tighten clearance-free during use.

A connector construction according to the invention is preferably arranged to enable transmission of both electric power and data signal.

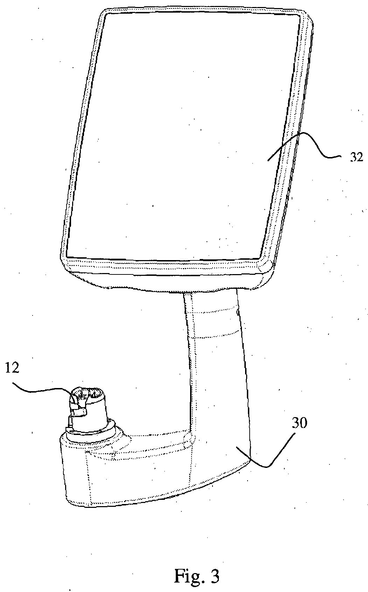

Figure 3 presents an arm according to one preferable embodiment of the invention for connecting a module to a dental care unit. The arm according to the figure includes a mechanical arm (30), a male connector half (12) and a module (32) to be integrated to the dental care apparatus. In Fig. 3, this module is a graphic user interface.

It is important for a quick-connector type mechanical and/or electric connector arrangement used in a dental care apparatus to strive for having no clearance between the connector halves. According to the invention the connector arrangement is used, among other things, for media transmission of the user interface of the dental care apparatus, whereby the possible interruptions in media transmission caused by the clearance would be critical for the function of the whole system. A connector according to the invention is suitable for use also in the so-called spray area of a dental care apparatus, which area is exposed to various impurities during treatment, such as pathogens and various liquids, which during treatment splatter around in the form of a spray cloud.
By using the preferable embodiment of the connector arrangement presented one may steadily and quickly connect accessories to a dental care apparatus via aconnector. The connector interface is always the same, only the arm and the module to be attached change according to the purpose of use. This way, in the solution according to the invention, the module may be located on the best location in view of its purpose of use.

Generally speaking, the invention is applicable for use in a dental care apparatus, which includes a dental care unit and in which is arranged at least one connector construction for at least one of the following: an arm for dentist's instruments, an arm for assistant's instruments and/or for a suction system of the dental care apparatus, an arm for a display, an arm for a light, an arm for a tray, an arm arranged for some other means used in the dental care environment. Thus, according to the invention, a connector construction for any of the means mentioned or not mentioned above for use in the dental care environment is arranged in a dental care apparatus. It is essential for the connector construction that it comprises means to releasably connect at least one of the aforementioned arms together with the dental care unit such that either only a mechanical connection is formed or such that both a mechanical and an electric connection is formed between the arm and said connector construction. It is preferable to realize the dental care unit for its external structure at least as symmetrical, and at least a part of said connector constructions is placed symmetrically on different sides of the dental care unit.

## Claims

1. An arm construction to be connected to a dental care unit (1) for coupling an accessory to the dental care unit (1), in which arm (3, 4, 5, 6, 30) is arranged a means (11, 12) for enabling mechanical and electric connection of the arm to the dental care unit, **characterized in that** said means enabling the mechanical and electric connection is realized in a quick-connector type fashion to enable connection of the arm (3, 4, 5, 6, 30) to the dental care unit (1) without using tools and such that either
i) only a mechanical connection is formed or such that
ii) both a mechanical and an electric connection is formed between the arm (3, 4, 5, 6, 30) and the dental care unit (1).

2. The arm construction according to claim 1, **characterized in that** said means (11, 12) to enable mechanical and electric connection of the arm to the dental care unit comprise an essentially cylindrical male connector piece (12), in which a guide slot is arranged to receive a stud (27) or an equivalent component arranged on the body of the female connector piece (11) and an axially extending safety wedge (18), at which force is arranged to be directed striving to push the wedge (18) axially towards the female connector piece (11).

3. A dental care apparatus, which includes a dental care unit (1) and an arm construction according claims 1 or 2, in which at least one connector construction (11, 12) is arranged for at least one of the following: an arm for dentist's instruments (3), an arm for assistant's instruments (4), an arm for a suction system of the dental care apparatus, an arm for a display (6), an arm for a user interface (30), an arm for a light (5), an arm for a tray, an arm arranged for some other means used in dental care environment, **characterized in that** said at least one connector construction (11, 12) is a quick-connector including means to releasably connect without using tools at least one of the aforementioned arms (3, 4, 5, 6, 30) to the dental care unit (1) such that either
i) only a mechanical connection is formed or such that
ii) both a mechanical and an electric connection is formed between the arm and said connection construction.

4. The dental care apparatus according to claim 3, **characterized in that** there is a number of said connector constructions (11, 12) placed on different sides of the dental care unit (1).

5. The dental care apparatus according to claim 3 or 4, **characterized in that** said dental care unit (1) is realized for at least of its external structure as symmetrical and at least some of said connector constructions are placed symmetrically in different sides of the dental care unit (1).

6. The dental care apparatus according to one of the claims 3-5, **characterized in that** the apparatus includes an arm for dentist's instruments (3), preferably at the end of which arm (3) is arranged an instrument table (7), into which is arranged at least one connector construction (11, 12) according to claim 1.

7. The dental care apparatus according to claim 6, **characterized in that** said instrument table (7) is realized for at least of its external structure as symmetrical and at least some of said connector constructions (11, 12) are placed symmetrically on different sides of the instrument table (7).

8. The dental care apparatus according to one of the claims 3-7 **characterized in that** said connector construction (11, 12) is arranged to enable transmission of electric power and/or data signal.

9. The dental care apparatus according to one of the claims 3-8 **characterized in-that** the apparatus includes an arm for assistant's instrument stand (4) and at least one connector construction (11, 12) according to claim 1 arranged in connection with it.

10. The dental care apparatus according to one of the claims 3-9 **characterized in that** the dental care apparatus comprises a patient chair (2) and on the patient chair (2), at least two aforementioned connector constructions (11, 12) are arranged symmetrically.

11. The dental care apparatus according to one of the claims 3-10, **characterized in that** said connector construction (11, 12) is realized such that it tends to tighten clearance-free during use.

12. The dental care apparatus according to one of the claims 3-11 **characterized in that** said connector construction (11, 12) contains a female connector piece (11), which is arranged to receive an essentially cylindrical male connector piece (12), on the body of which female connector piece (11) is arranged a stud (27) or an equivalent component fitted to move in a guide slot arranged on the male connector (12) and a wedge-shaped slot extending in the axial direction of the connector construction (11, 12) to receive a safety wedge (18) arranged on the male connector piece (12).

## Patentansprüche

1. Armaufbau, der mit einer Zahnpflegeeinheit (1) verbunden wird, zum Koppeln eines Zubehörs mit der Zahnpflegeeinheit (1), wobei in dem Arm (3, 4, 5, 6, 30) ein Mittel (11, 12) zum Ermöglichen einer mechanischen und elektrischen Verbindung des Arms mit der Zahnpflegeeinheit angeordnet ist, **dadurch gekennzeichnet, dass** das Mittel, das die mechanische und elektrische Verbindung ermöglicht, in der Art eines Schnell-Verbindungstyps realisiert ist, um eine Verbindung des Arms (3, 4, 5, 6, 30) mit der Zahnpflegeeinheit (1), ohne Verwendung von Werkzeugen, zu ermöglichen und so, dass entweder
i) nur eine mechanische Verbindung geformt wird oder so, dass
ii) beides, eine mechanische und eine elektrische Verbindung, geformt wird ,
zwischen dem Arm (3, 4, 5, 6, 30) und der Zahnpflegeeinheit (1).

2. Armaufbau nach Anspruch 1, **dadurch gekennzeichnet, dass** das Mittel (11, 12), um eine mechanischen und elektrischen Verbindung des Arms mit der Zahnpflegeeinheit zu ermöglichen, ein im Wesentlichen zylindrisches männliches Verbindungsstück (12) aufweist, in dem eine Führungsaussparung angeordnet ist, um einen Stift (27) oder eine äquivalente Komponente aufzunehmen, die an dem Körper des weiblichen Verbindungsstücks (11) angeordnet ist, und einen sich axial erstreckenden Sicherheitskeil (18), an dem die Kraft angeordnet ist, um strebsam gerichtet den Keil (18) axial in Richtung des weiblichen Verbindungsstücks (11) zu schieben.

3. Zahnpflegevorrichtung, die eine Zahnpflegeeinheit (1) und einen Armaufbau nach Anspruch 1 oder 2 umfasst, bei der mindestens eine Verbindungskonstruktion (11, 12) für mindestens eines der Folgenden angeordnet ist: ein Arm für Zahnarztinstrumente (3), ein Arm für Assistenzinstrumente (4), ein Arm für ein Absaugsystem der Zahnpflegevorrichtung, ein Arm für eine Anzeige (6), ein Arm für eine Benutzerschnittstelle (30), ein Arm für Licht (5), ein Arm für ein Tablett, ein Arm, der für einige andere Mittel, die in der Zahnpflegeumgebung verwendet werden, angeordnet ist, **dadurch gekennzeichnet, dass** die wenigstens eine Verbindungskonstruktion (11, 12) ein Schnell-Verbinder ist, der Mittel aufweist um wenigstens einen der vorgehnannten Arme (3, 4, 5, 6, 30) mit der Zahnpflegeeinheit (1) lösbar, ohne Werkzeuge, zu verbinden so, dass entweder
i) nur eine mechanische Verbindung geformt wird oder so, dass
ii) beides, eine mechanische und eine elektrische Verbindung, geformt wird
zwischen dem Arm und der Verbindungskonstruktion.

4. Zahnpflegevorrichtung nach Anspruch 3, **dadurch gekennzeichnet, dass** eine Anzahl der Verbindungskonstruktionen (11, 12) auf verschiedenen Seiten der Zahnpflegeeinheit (1) angeordnet ist.

5. Zahnpflegevorrichtung nach Anspruch 3 oder 4, **dadurch gekennzeichnet, dass** die Zahnpflegeeinheit (1), für mindestens seine äußere Struktur, symmetrisch ausgebildet ist und mindestens einige der Verbindungskonstruktionen symmetrisch an verschiedenen Seiten der Zahnpflegeeinheit (1) angeordnet sind.

6. Zahnpflegevorrichtung nach einem der Ansprüche 3 bis 5, **dadurch gekennzeichnet, dass** die Vorrichtung einen Arm für Zahnarztinstrumente (3) umfasst, vorzugsweise ist an dem Ende des Armes (3) ein Instrumententisch (7) angeordnet, in dem mindestens eine Verbindungskonstruktion (11, 12) nach Anspruch 1 angeordnet ist.

7. Zahnpflegevorrichtung nach Anspruch 6, **dadurch gekennzeichnet, dass** der Instrumententisch (7), für mindestens seine äußere Struktur, symmetrisch angeordnet ist und mindestens einige der Verbindungskonstruktionen (11, 12) symmetrisch an verschiedenen Seiten des Instrumententisches (7) angeordnet sind.

8. Zahnpflegevorrichtung nach einem der Ansprüche 3 bis 7, **dadurch gekennzeichnet, dass** die Verbindungskonstruktion (11, 12) angeordnet ist, um die Übertragung von elektrischer Energie und/oder Datensignalen zu ermöglichen.

9. Zahnpflegevorrichtung nach einem der Ansprüche 3 bis 8, **dadurch gekennzeichnet, dass** die Vorrichtung einen Arm, für einen Assistentenzinstrumentenständer (4) aufweist und mindestens eine Verbindungskonstruktion (11, 12) nach Anspruch 1, die in Verbindung mit diesem angeordnet sind.

10. Zahnpflegevorrichtung nach einem der Ansprüche 3 bis 9, **dadurch gekennzeichnet, dass** die Zahnpflegevorrichtung einen Patientenstuhl (2) aufweist und auf dem Patientenstuhl (2) mindestens zwei vorgenannte Verbindungskonstruktionen (11, 12) symmetrisch angeordnet sind.

11. Zahnpflegevorrichtung nach einem der Ansprüche 3 bis 10, **dadurch gekennzeichnet, dass** die Verbindungskonstruktion (11, 12) so ausgebildet ist, dass sie dazu neigt bei der Verwendung spielfrei festzuziehen.

12. Zahnpflegevorrichtung nach einem der Ansprüche 3 bis 11, **dadurch gekennzeichnet, dass** die Verbindungskonstruktion (11, 12) ein weibliches Verbindungsstück (11) enthält, welches so angeordnet ist, dass es ein im Wesentlichen zylindrisches männliches Verbindungsstück (12) aufnehmen kann, wobei an dem Körper des weiblichen Verbindungsstücks (11) ein Stift (27) oder eine äquivalente Komponente angeordnet ist, angepasst sich in eine Führungsaussparung, die an dem männlichen Verbinder (12) angeordnet ist, zu bewegen, und ein keilförmiger Schlitz, der sich in der axialen Richtung der Verbindungskonstruktion (11, 12) erstreckt, um einen Sicherheitskeil (18) aufzunehmen, der an dem männlichen Verbindungsstück (12) angeordnet ist.

## Revendications

1. Structure de bras à raccorder à une unité de soins dentaires (1) pour coupler un accessoire à l'unité de soins dentaires (1), ledit bras (3, 4, 5, 6, 30) comprenant un moyen (11, 12) pour permettre le raccordement mécanique et électrique du bras à l'unité de soins dentaires, **caractérisée en ce que** ledit moyen permettant le raccordement mécanique et électrique est réalisé au moyen d'un raccord de type rapide pour permettre le raccordement du bras (3, 4, 5, 6, 30) à l'unité des soins dentaires (1) sans utiliser d'outils et de telle sorte que, soit
i) seul un raccordement mécanique est formé ou de telle sorte que
ii) un raccordement mécanique et un raccordement électrique sont formés entre le bras (3, 4, 5, 6, 30) et l'unité de soins dentaires (1).

2. Structure de bras selon la revendication 1, **caractérisée en ce que** ledit moyen (11, 12) pour permettre le raccordement mécanique et électrique du bras à l'unité de soins dentaires comprend une pièce de raccordement mâle essentiellement cylindrique (12), dans laquelle une fente de guidage est conçue pour recevoir un tourillon (27) ou un composant équivalent placé sur le corps de la pièce de raccordement femelle (11) et une cale de sécurité s'étendant axialement (18), au niveau de laquelle une force est destinée à être orientée pour s'efforcer de pousser la cale (18) axialement vers la pièce de raccordement femelle (11).

3. Appareil de soins dentaires, qui comprend une unité de soins dentaires (1) et une structure de bras selon la revendication 1 ou 2, dans lequel au moins une structure de raccordement (11, 12) est conçue pour au moins l'un des éléments suivants : un bras pour des instruments de dentiste (3), un bras pour des instruments d'assistant (4), un bras pour un système d'aspiration de l'appareil de soins dentaires, un bras pour un écran (6), un bras pour une interface utilisateur (30), un bras pour une lampe (5), un bras pour un plateau, un bras conçu pour tout autre moyen utilisé dans un environnement de soins dentaires, **caractérisé en ce que** ladite au moins une structure de raccordement (11, 12) est un raccord rapide comprenant un moyen pour raccorder de façon amovible sans utiliser d'outils au moins l'un des bras susmentionnés (3, 4, 5, 6, 30) à l'unité de soins dentaires (1) de telle sorte que, soit
i) seul un raccordement mécanique est formé, ou de telle sorte que
ii) un raccordement mécanique et un raccordement électrique sont formés
entre le bras et ladite structure de raccordement.

4. Appareil de soins dentaires selon la revendication 3, **caractérisé en ce que** plusieurs desdites structures de raccordement (11, 12) sont placées sur différents côtés de l'unité de soins dentaires (1).

5. Appareil de soins dentaires selon la revendication 3 ou 4, **caractérisé en ce que** ladite unité de soins dentaires (1) est réalisée pour qu'au moins sa structure externe soit symétrique et qu'au moins certaines desdites structures de raccordement soient placées symétriquement dans différents côtés de l'unité de soins dentaires (1).

6. Appareil de soins dentaires selon l'une quelconque des revendications 3 à 5, **caractérisé en ce que** l'appareil comprend un bras pour des instruments de dentiste (3), de préférence, une table d'instrument (7), dans laquelle est agencée une structure de raccordement (11, 12) selon la revendication 1, est disposée à l'extrémité dudit bras (3).

7. Appareil de soins dentaires selon la revendication 6, **caractérisé en ce que** ladite table d'instrument (7) est réalisée pour qu'au moins sa structure externe soit symétrique et qu'au moins certaines desdites structures de raccordement (11, 12) soient placées symétriquement sur différents côtés de la table d'instrument (7).

8. Appareil de soins dentaires selon l'une des revendications 3 à 7, **caractérisé en ce que** ladite structure de raccordement (11, 12) est conçue pour permettre la transmission de puissance électrique et/ou de signal de données.

9. Appareil de soins dentaires selon l'une quelconque des revendications 3 à 8, **caractérisé en ce que** l'appareil comprend un bras pour socle d'instrument d'assistant (4) et au moins une structure de raccordement (11, 12) selon la revendication 1, conçue en raccordement avec celui-ci.

10. Appareil de soins dentaires selon l'une quelconque des revendications 3 à 9, **caractérisé en ce que** l'appareil de soins dentaires comprend un fauteuil de patient (2) et sur le fauteuil de patient (2), au moins deux structures de raccordement (11, 12) susmentionnées sont placées symétriquement.

11. Appareil de soins dentaires selon l'une quelconque des revendications 3 à 10, **caractérisé en ce que** ladite structure de raccordement (11, 12) est réalisée de telle sorte qu'elle ait tendance à se resserrer sans jeu pendant l'utilisation.

12. Appareil de soins dentaires selon l'une quelconque des revendications 3 à 11, **caractérisé en ce que** ladite structure de raccordement (11, 12) contient une pièce de raccordement femelle (11), qui est conçue pour recevoir une pièce de raccordement mâle essentiellement cylindrique (12), le corps de ladite pièce de raccordement femelle (11) étant dotée d'un tourillon (27) ou d'un composant équivalent conçu pour se déplacer dans une fente de guidage disposée sur le raccord mâle (12) et une fente en forme de cale s'étendant dans la direction axiale de la structure de raccordement (11, 12) pour recevoir une cale de sécurité (18) placée sur la pièce de raccordement mâle (12).
